# EUROPÄISCHE PATENTSCHRIFT

(11) **EP 1 910 773 B1**
(45) Veröffentlichungstag und Bekanntmachung des Hinweises auf die Patenterteilung: **27.03.2013**
(21) Anmeldenummer: 06776515.6
(22) Anmeldetag: 29.07.2006
(51) Int. Cl.: G01B 7/02

(54) **VERFAHREN UND VORRICHTUNG ZUR ENTFERNUNGSMESSUNG MITTELS KAPAZITIVEN ODER INDUKTIVEN SENSOREN**
METHOD AND DEVICE FOR DISTANCE MEASUREMENT BY MEANS OF CAPACITIVE OR INDUCTIVE SENSORS
PROCEDE ET DISPOSITIF DE TELEMETRIE AU MOYEN DE CAPTEURS CAPACITIFS OU INDUCTIFS

(30) Priorität: 29.07.2005 DE 102005036354; 27.09.2005 DE 102005045993; 14.12.2005 DE 102005063023
(43) Veröffentlichungstag der Anmeldung: 16.04.2008
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2006/007550
(87) Internationale Veröffentlichungsnummer: WO 2007/012502

(56) Entgegenhaltungen:
- DE-A1- 2 158 320
- US-A- 4 677 490
- US-A- 4 806 848
- US-A- 5 136 250
- US-B1- 6 348 862

## Beschreibung

Die Erfindung betrifft ein Verfahren und eine Vorrichtung zur Messung der Beeinflussung oder der Laufzeit von elektrischen und/oder magnetischen Feldern bzw. Feldänderungen nach dem Oberbegriff der Ansprüche 1 und 6.

In vielen Anwendungsbereichen muss die Entfernung eines Bezugsobjektes zu anderen Objekten bestimmt werden. Ein derartiger Einsatzbereich kann beispielsweise das Erkennen von metallischen Gegenständen im Erdreich oder die Annäherung von Objekten im Automotivebereich sein.

Eine Möglichkeit zur Entfernungsmessung ist die Messung der Lichtlaufzeit zwischen einem Lichtstrahlung aussendenden Sender, einem diese Lichtstrahlung reflektierenden Objekt und einem Empfänger. Eine derartige Lösung ist z.B. aus der DE 100 22 054 A1 als optischer Distanzsensor bekannt, bei dem die Phasenverschiebung zwischen Sende- und Empfangslichtstrahlen zur Entfernungsmessung herangezogen wird. Dazu wird das Empfangssignal mit einer Mindestamplitude zusammen mit der Spannung eines Oszillators einem Synchrongleichrichter zugeführt. Es wird also ein aus der Lichtstrecke stammendes Messsignal mit einem rein elektrisch erzeugten Signal den Eingängen des Synchrongleichrichters zugeführt. Mittels dem am Ausgang des Synchrongleichrichters anstehenden Ausgangssignal wird durch Ansteuerung eines Verzögerungsglieds das Eingangssignal so lange bis zu einem Vorzeichenwechsel geregelt, bis der Mittelwert der beiden Signale am Ausgang etwa Null wird. Dabei hat der Synchrongleichrichter die Aufgabe, sehr präzise die Phasen des Signals zu ermitteln. Bauteilbedingte Verzögerungen, Atterungs- und Temperatureinflüsse werden gesondert referenziert und kompensiert. Selbst bei Verwendung einer Referenzlichtstrecke erfolgt die Regelung elektrisch durch Beeinflussung des Verzögerungsglieds. Einem klassischen Synchrongleichrichter wird damit das Photodiodensignal und das rein elektrisch übertragene Signal um 90° bzw. 270° versetzt zur Phasendetektion zugeführt. Dazu sind die Signale vor dem Synchrongleichrichter ungleich Null mit dem Ziel, die jeweiligen Signalabschnitte des empfangenen Signals gleich lang zu halten

Aus der US-A 4,806,848 ist ein Verfahren zur kapazitiven Messung des Abstandes von Turbinenblättem einer Turbine bekannt Das Turbinenblatt befindet sich im sensoraktiven Bereich eines Messfühlers, dessen Messwert mit einem Referenzwert verglichen wird. Messwert und Referenzwert werden getaktet einem Phasendetektor zugeführt, an dessen Ausgang die Amplitude der Phase gemessen und mittels einer Feinabstimmung eine vorgegebene Amplitudenverschiebung auf eine Grundlinie durchgeführt wird. Diese Kalibrierung erfolgt zu Beginn der Messung und wird hinterher konstant gehalten. Eine gesonderte Amplitudenregelung der ermittelten Werte aus Messstrecke und Referenzstrecke zu Null vor der Phasenregelung erfolgt nicht. Ähnliche Vorrichtungen sind aus US-A 4,677,490, US 6,348,862 B1 und DE-A 21 58 320 bekannt.

Aus der WO 01/90778 A1 ist ferner ein Verfahren zur Entfernungsmessung durch Laufzeitmessung bekannt, wobei das Sendesignal und das am Empfänger anliegende Empfangsignal mit dem selben Takt angesteuert werden. Die so ermittelten Ansteuersignale werden mittels eines Phasenschiebers so verschoben, dass die Entfemungsabweichung zwischen der durch die Laufzeitmessung bestimmten Entfernung zum Zielobjekt und der tatsächlichen Entfernung minimal wird. Ziel ist die Abtastpunkte mit der Laufzeit bei hohen Frequenzen zu optimieren.

Aus der EP 706 648 B1 ist es bekannt, Lichtsignale unter Kompensation äußerer Einflüsse wie Fremdlicht-, Temperatur- oder Alterungseinflüsse zwischen Lichtsender und Lichtempfänger zu erfassen. Die Lichtsender werden über einen Taktgenerator zeitabschnittsweise und wechselweise betrieben. Das in der Amplitude wenigstens einer Lichtstrecke geregelte Licht wirkt gegebenenfalls mit dem Licht eines weiteren Lichtsenders wie z.B. einer Kompensationslichtquelle so auf den Lichtempfänger ein, dass ein Empfangssignal ohne taktsynchrone Signalanteile entsteht. Das Empfangssignal des Lichtempfängers wird einem Synchrondemodulator zugeführt, der das Empfangssignal wiederum in die den beiden Lichtquellen entsprechende Signalkomponenten zerlegt. Diese werden in einem Vergleicher miteinander verglichen, wobei ohne Fremdlichtanteile ein einem Nullzustand entsprechendes Signal entsteht. Liegt am Ausgang des Vergleichers kein diesem Nullzustand entsprechendes Signal an, wird die Strahlungsleistung, die den Lichtquellen zugeführt wird, dahingehend geregelt, bis dieser Zustand erreicht ist.

Alternativ zur Messung der Lichtlaufzeit, die insbesondere bei für eine Lichtstrahlung nicht durchlässigen Medien unmöglich wird, kann eine Entfernungsmessung erfolgen, wenn es möglich ist, die Änderungen eines elektrischen und/oder magnetischen Feldes zu erfassen, die sich in Folge der Annäherung, Anwesenheit und/oder Entfernung eines das Feld beeinflussenden Objekts ergeben. Untersuchungen haben ergeben, dass sich Impulse, die zu Änderungen an solchen Feldern führen, indem eine Ladungs- oder Induktionsänderung erzeugt wird, mit Lichtgeschwindigkeit fortpflanzen, während die Änderungen selbst also z.B. ein Ladungsanstieg zeitlich langsamer erfolgen.

### Offenbarung der Erfindung

Ausgehend von diesem Stand der Technik liegt der vorliegenden Erfindung die Aufgabe zugrunde, alternative Verfahren zur Messung der Beeinflussung oder Laufzeit von elektrischen und/oder magnetischen Feldern auf kapazitivem und/oder induktivem Wege zu schaf fen.

Diese Aufgabe wird durch ein Verfahren mit den Merkmalen des Anspruches 1 und eine Vorrichtung mit den Merkmalen des Anspruches 6 gelöst.

Als aussendende Elemente und Empfänger werden je nach kapazitiver oder induktiver Erfassung Elektroden oder Spulen gewählt, die mit Kapazitäten und Induktivitäten in ihrem Umfeld interagieren oder die von Objekten, die das Feld und damit den Mosskreis beeinflussen, beeinflusst werden. Selbstverständlich können auch andere Mittel zur Erzeugung und Erfassung der elektrischen und/oder magnetischen Felder verwendet werden. Damit kann das aus der EP 706 648 B1 bekannte Prinzip einer optischen Waage auch zur Messung der Beeinflussung oder der Laufzeit von elektrischen und/oder magnetischen Feldern bzw. Feldänderungen eingesetzt werden.

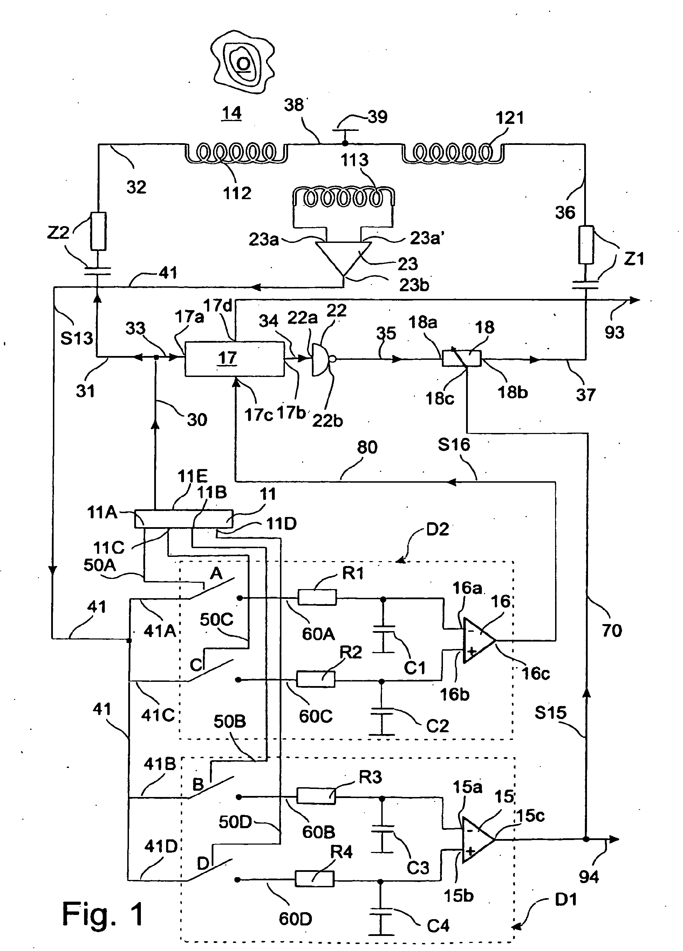

Dem Empfänger werden getaktete Signale von wenigstens zwei Feldänderungen erzeugenden bzw. aussendenden Elementen in Form von Elektroden oder Spulen zugeleitet. Der in Fig. 1 dargestellte Kondensator entspricht dann zwei Elektroden mit definiertem Abstand. Im Fall einer kapazitiven Lösung wird das elektrische Feld, das durch auf die Elektrode aufgebrachte Ladungen aufgebaut wurde, z.B. durch das zu erfassende Objekt verändert, d.h., es findet eine zeitliche Änderung des elektrischen und/oder magnetischen Feldes statt. Dies führt zu einer veränderten Ladung auf der Elektrode, was wiederum gemessen wird, um die Entfernung/Einwirkung des Objekts zu bestimmen. Die Feldänderung des elektrischen Feldes wird von einem Empfänger ermittelt, der an die aussendende Elektrode angekoppelt ist. Eine Kompensation erfolgt über einen Kondensator, der anders als Sendeelektrode und Objekt, die Insofern auch eine Art Kondensator bilden, über einen bekannten Abstand der Flächen zueinander verfügt. Auch vom Kondensator gelangt eine Feldänderung zum Empfänger. Die Empfangssignale und damit die Änderungswerte aus den belden Messstrecken werden miteinander verglichen und auf geringstmögliche Unterschiede zueinander mittels Amplituden- und Phasenregelung ausgeregelt. Die Regelwerte der Amplituden- bzw. Phasenregelung entsprechen dann dem Wert der Kapazität bzw. der Laufzeit, die benötigt wird, um die Feldlinien aufzubauen.

Dazu wird das Empfangssignal eines Taktzyklus aus Sendeelektrode und Kompensationselektrode in vorzugsweise etwa vier gleiche Abschnitte, d.h. Einschaltzeitabschnitte eingeteilt. Wird die Einschaltzeit der Sendeelektrode mit den Abschnitten A und B bezeichnet und die Einschaltzeit der Kompensationselektrode mit C und D, so werden die Abschnitte A und C verglichen und mittels Phasenverschiebung zueinander auf geringstmögliche Unterschiede ausgeregelt. Die Abschnitte B und D werden mittels Amplitudenregelung ebenso zueinander auf geringstmögliche Unterschiede ausgeregelt. In den Abschnitten A und C steckt die Information der Laufzeit, in den Abschnitten B und D die Information über die statische Kapazität bzw. statische Beeinflussung des Feldes. Aus der Verzögerung des Phasenschiebers kann dann die Laufzeit von Feldänderungen des elektrischen Felds und damit die Entfernung zwischen Elektrode und Objekt bzw. Empfänger bestimmt werden. Bei einer induktiven Lösung sind im Wesentlichen nur die Sendeelektrode und die Kompensationselektrode durch eine Spule und eine Kompensationsspule zu ersetzen, wobei der Empfänger eventuell auch als Empfangsspule ausgebildet sein kann.

Die Kompensation ermöglicht ein vollständiges Auslöschen der taktsynchronen Signalanteille, d.h. nur das eigentliche Verstärkerrauschen bleibt übrig. Der Verstärker kann daher eine sehr hohe Verstärkung aufweisen, bzw. kann sogar als hochverstärkender Begrenzerverstärker ausgeführt werden.

Damit werden die bei Taktwechsel auftretenden Taktwechselsignale erfasst und aus diesen ein Differenzwert bestimmt, der mittels eines Phasenschiebers minimiert wird. Aus der durch den Phasenschieber verursachten Verzögerung des Signals kann die Beeinflussung oder die Laufzeit von elektrischen und/oder magnetischen Feldern bzw. Feldänderungen und damit die Entfernung zwischen Sender und Objekt bzw. Empfänger bestimmt werden. Durch die hohe Verstärkung des Empfangssignals zeichnet sich die Laufzeit des Feldes als Spannungspeak beim Taktwechsel deutlich ab. Dieser Peak tritt im jeweiligen Takt des aussendenden Elements, also der Sendeelektrode und der Kompensationselektrode - je nach Schaltung spätestens an den Vergleichem - mit unterschiedlicher Polarität gegenüber dem Mittelwert des Rauschens auf und gelangt auf zwei entsprechend synchron zum Takt zu den entsprechenden Zeitabschnitten geschaltete Eingänge eines Vergleichers. Dieses Taktwechselsignal ist von der Amplitude her abhängig von der Feldlaufzeit, da es jedoch lediglich um die Minimierung des Differenzwertes geht, lässt sich der Differenzwert des Signals von Takt zu Takt taktsynchron in der Amplitude demodulieren und eine vorhandene Differenz zur Ansteuerung des Phasenschiebers und zum Ausgleich dieser Differenz zu Null verwenden. Aufgrund des Taktes ist der Zeitpunkt des Auftretens des Taktwechselsignals bekannt, so dass dort nur der Peak zu erfassen ist. Gleichzeitig kann mit einem beliebigen Takt gearbeitet werden.

Durch die beiden geschlossenen Regelkreise einer Amplitudenregelung einerseits und einer Laufzeitregelung andererseits werden folgende Vorteile erreicht:
- sehr hohe Empfindlichkeit
- sehr gute Laufzeitmessung auch im Nahbereich (bis "0"- Abstand)
- keine Temperatureinflüsse auf Laufzeitdetektion
- unkritisch bei Änderungen der Vorverstärkerparameter
- kein Einfluss der Eigenschaften des Objekts auf die Entfernungsmessung.

Weitere Vorteile ergeben sich aus der nachfolgenden Beschreibung und den weiteren Ansprüchen.

im Folgenden wird die Erfindung anhand von in den Figuren dargestellten Ausführungsbeispielen näher erläutert. Es zeigen:
- Fig. 1: ein schematisches Schaltbild einer erfindungsgemäßen Schaltung zur Messung der Beeinflussung oder der Laufzeit eines elektrischen Felds bzw. von Feldänderungen,
- Fig. 2: das am Empfänger der Fig. 1 anstehende Empfangssignal mit der zugehörigen Aufteilung in verschiedene Bereiche,
- Fig. 3: das Signal gemäß Fig. 2 oben nach Ausregelung der Amplitude und Phase,
- Fig. 4: den Signalverlauf am Empfänger aus der Messstrecke ohne und mit Erfassungsstrecke idealisiert dargestellt.
- Fig. 5: den resultierende Feldlaufzeitimpuls zum Empfänger idealisiert dargestellt,
- Fig. 6: beispielhaft einen Puls aus Fig. 5,
- Fig. 7: den Puls von Fig. 6 nach Durchlaufen von Empfänger und Verstärker,
- Fig. 8: ein schematisches Schaltbild einer erfindungsgemäßen Schaltung zur Messung der Beeinflussung oder der Laufzeit eines magnetischen Felds bzw. von Feldänderungen.

Bevor die Erfindung im Detail beschrieben wird, ist darauf hinzuweisen, dass sie nicht auf jeweiligen Bauteile der Schaltung oder die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem In der Beschreibung und in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

Die Erfindung ermöglicht eine Entfernungsmessung, die frei von Fremdeinflüssen unabhängig von den Materialeigenschaften des Objekts mit Verstärkern geringer Bandbreite eine exakte Laufzeitmessung von elektrischen und/oder magnetischen Feldern bzw. Feldänderungen erlaubt. Des weiteren ist eine Laufzeitmessung im Nahbereich ab Elektroden- oder Spulenoberfläche bis hin zu größeren Entfernungen ohne Umschalten des Messbereichs möglich.

Die Erfindung geht von nachfolgender überlegung aus:
Ein Entfernungsmessung infolge von elektrischen und/oder magnetischen Feldern bzw. Feldänderungen kann erfolgen, wenn es möglich ist, die Änderungen eines Feldes zu erfassen, die sich in Folge der Annäherung, Anwesenheit und/oder Entfernung eines das Feld beeinflussenden Objekts ergeben.

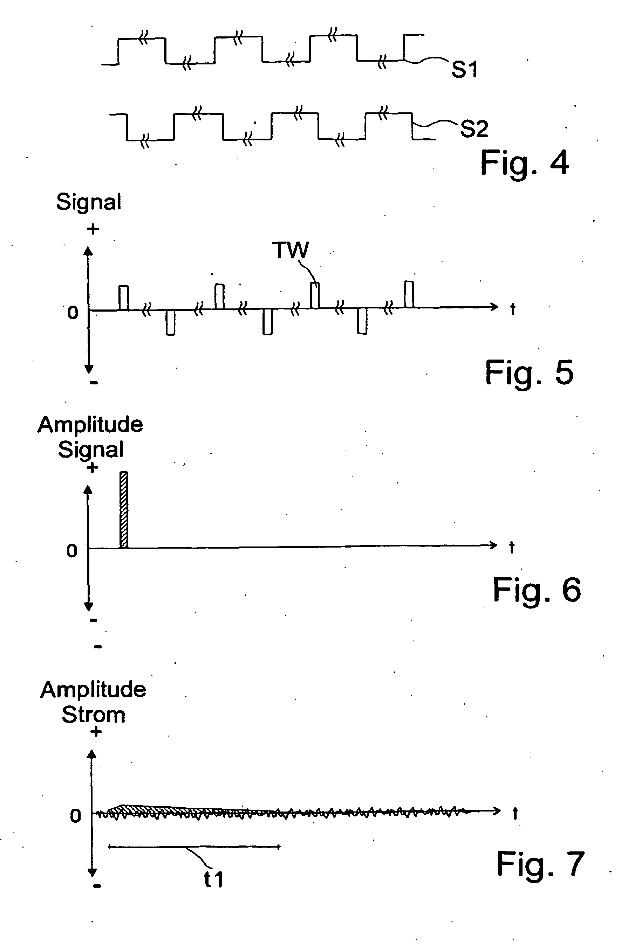

Dies wird für den Fall eine kapazitiven Lösung im Folgenden erläutert: Eine Elektrode 12, die mit einem Objekt O einen Kondensator bildet, erhält als eine erste Feldänderung aussendendes bzw. erzeugendes Element taktweise Ladungsteilchen, die ihre Wirkung im Umfeld beeinflussen. Die taktweise in Form eines Spannungspulses aufgebrachte Ladung wird durch die Annäherung, Anwesenheit oder Entfernung eines Objekts O beeinflusst. Diese Beeinflussung erfolgt nicht sofort, sondern mit der Verzögerung der Lichtlaufzeit. Die Feldänderungen können empfangen werden und im Verstärker 23 zusammengeführt von den Elektroden abgenommen werden. Befindet sich nun das Objekt O im sensoraktiven Bereich 14, d.h. erreicht die Erfassungsstrecke zwischen aussendendem Element und Objekt das Objekt z.B. in ca. 15 cm Entfernung werden die dynamisch von der Vorrichtung erfassten Feldänderungen vom Empfänger als einem mit dem aussendendem Element in Wirkverbindung stehendem Element empfangen. In der theoretischen Betrachtung erscheint die vom Objekt zurückgegebene Feldänderungsinformation um die Lichtlaufzeit, d.h. bei 15 cm um ca. 1 ns zeitversetzt zur Sendeinformation. Zunächst wird die Zeitdifferenz von der eigentlichen Pulsinformation abgetrennt. Dazu wird in der Pulspause der Sendeimpuls für die Kompensationselektrode 21 aktiviert, die ihre Feldänderung ohne den Umweg des Objekts O direkt aufnimmt. Zwar kann auch die Kompensationselektrode mit dem Objekt interagieren, wesentlich ist jedoch nur, dass wenigstens eine der Erfassungsstrecken von dem Objekt beeinflussbar ist. Kommen auf der Leitung 40 beide Signalleistungen S1, S2 gemäß Fig. 4 mit gleicher Amplitude an (die natürlich über eine Amplitudenregelung der Elektroden 12, 21 gleich groß gehalten werden kann) erscheint am Eingang 23a des Verstärkers 23 im Wesentlichen ein Gleichspannungssignal bestehend aus Spannungssignalen der beiden Ladungsträger alternierend und einem möglichen Versatz.

Bei genauerer Betrachtung ist dem Gleichspannungssignal am Verstärker 23 an dem Über gang der Sendepulse der beiden Elektroden eine Laufzeitdifferenz von 1 ns aufgeprägt. In einer Phase entsteht eine Lücke im Gleichspannungssignal der abwechselnden Signalverläufe dort, wo die kompensierende Elektrode 21 schon abgeschaltet hat, aber der Änderungsimpuls der Ladung der Sendeelektrode 12 noch die 15 cm zum Gegenstand und zurück zurücklegen muss. In der zweiten Phase überträgt die kompensierende Elektrode 21 schon Ladung, während von der im richtigen Zeitpunkt zwar abgeschalteten Sendeelektrode 12 immer noch ein Ladungsimpuls unterwegs ist. Schematisch ist dies in Fig. 5 dargestellt. Es ergibt sich ein sehr kurzer Peak im Empfangssignal mit phasensynchroner, im Ausführungsbeispiel abwechselnder Polarität. Diese Zeitdifferenz ist für den Empfänger extrem klein, sodass sie bei einem Tiefpassverhalten von z.B. 200 KHz nur als extrem geringer Stromänderungswert auftritt.

Hierauf wird das Energieerhaltungsgesetz angewandt: Nehmen wir an, nur die nach außen zum Objekt O gerichtete Elektrode 12 würde getaktet Ladung einbringen bzw. abziehen und die zur Kompensation bestimmte Elektrode 21 wäre aus, gelangt zum Verstärker 23 ein Wechselsignal, das als Spannung dargestellt z.B. eine Wechselspannung von 10mV an einem Ausgang 23b des beliebigen Wechselspannungsverstärkers ergibt. Könnten wir von einem idealen Empfänger und einem idealen Verstärker mit idealem Anstiegszeitverhalten ausgehen, würden wir bei einer sendenden Elektrode weiterhin von einem 10mV Ausgangssignal mit 50% Zyklus ausgehen. Schaltet man die zweite Elektrode hinzu, ergeben sich wegen der Laufzeit eines Signals Pulse von 1 ns taktsynchron abwechselnd in positiver und negativer Richtung (Fig. 5). Diese Pulse sind dann im beschriebenem Fall die einzige Information im verstärkten Signal und repräsentieren die Laufzeitinformation. In der Praxis wird jedoch das "Tiefpassverhalten" von Empfänger und Verstärker diesen extrem kurzen Impuls "verschlucken".

Hier kommt der Vorteil des amplitudenmäßig ausgeregelten Systems gemäß der Erfindung zum Tragen: Da nur die kurzen Pulse als Wechselinformation am Verstärker 23 anliegen, der z.B. aus einem dreistufigen Verstärker mit 200 KHz Bandbreite besteht, kann das Empfangssignal fast beliebig verstärkt werden z.B. mit einer Verstärkung von zehntausend. Der theoretische Änderungsimpuls von 1ns Länge und im Idealfall von 10 mV am ersten Verstär kerausgang ruft zwar in der Praxis nur einen stark verschliffenen Spannungshub von z.B. 10 µV hervor (schematisch Fig. 6), der aber nun nach einer zehntausendfachen Verstärkung in den weiteren Verstärkerstufen ein Signal von 100 mV mit einer Länge t1 von z.B. 5 µs ergibt (Fig. 7). Dabei werden an den Verstärker keine besonderen Ansprüche gestellt, 200 KHz Bandbreite reicht z.B. für eine entsprechende Verstärkung aus. Wenngleich beliebige Verstärker einsetzbar sind, werden vorzugsweise Wechselspannungsverstärker eingesetzt. Das Signal erscheint nach dem Umschaltet von einer Elektrode zur anderen nach dem Umschaltzeitpunkt in alternierenden Richtungen (positiv-negativ). Durch einen synchron zum Takt geschalteten Gleichrichter kann das Empfangssignal zu diesem Zeitpunkt auf synchrone Signalanteile untersucht werden. Durch einfache Integration der synchron demodulierten Signalanteile können auch in einem stark verrauschten Signal noch einwandfrei durch Laufzeitunterschiede entstandene Signalanteile detektiert werden. Zu erwähnen ist, dass es sich bei dem Synchrongleichrichter oder Synchrondemodulator D1, D2 nicht um eine Schaltung handelt, die die Phase genau zu detektieren hat, sondern die taktweise die Amplitude detektiert. Die Phasengenauigkeit hat keinen Einfluss auf die Messgenauigkeit, so dass z.B. eine Phasenverschiebung von 20° noch unbeachtlich ist.

Da das Auftreten dieser taktsynchronen Signalanteile auf einen Laufzeitunterschied zwischen den beiden Elektroden 12, 21 hinweist und dazu auch eine klare Zuordnung zu den Elektroden zulässt, kann mit dieser Information ein Regelkreis gemäß Fig. 1 (s.u.) derart geschlossen werden, dass das Signal der Kompensationselektrode 21 mit bekannten Mitteln (regelbare Laufzeit z.B. mittels einstellbarem Allpass oder digital einstellbarer Phasenverschiebung) um den gleichen Betrag verschoben wird wie die von einem Objekt beeinflusste Ladung. Die nötige Verschiebung des elektrischen Ansteuerimpulses am Phasenschieber 17 (Fig. 1) für die Elektrode 21 ist dann ein direktes Maß für die Beeinflussung oder die Laufzeit von Feldänderungen an dem elektrischen Feld und somit auch ein direktes Maß für die Wirkung oder Entfernung des Objekts O.

Nach der Synchrondemodulation der Laufzeit-abhängigen Signalanteile können die beiden Signalanteile zur gegenseitigen Ausregelung auf "0" mittels Phasenverschiebung der Elektrode 21 selbstverständlich z.B. in weiteren hochverstärkenden Operationsverstärkem - ohne besondere Anforderung an die Bandbreite - miteinander verglichen werden. Liegt dann ein noch so kleiner Unterschied der beiden taktsynchronen Signalanteile vor, wird dieser über die Phasenregelung zu "0" ausgeregelt.

Im Ausführungsbeispiel werden zwei unterschiedliche Regelkreise in Fig. 1 unten gleichzeitig verwendet. Zum einen wird die Empfangsamplitude für beide Ladungsstrecken durch Amplitudenregelung mindestens einer der beiden Elektroden am Eingang des Verstärkers 23 auf gleichen Wert geregelt, wie dies aus der EP 706 648 B1 bekannt. Da nach dem Umschalten von der wenigstens einen Elektrode auf die wenigstens einen weitere Elektrode der Phasenunterschied als Amplitudeninformation stark in die Länge gezogen ist, sollte erst zu einem Zeitpunkt das Signal auf taktsynchrone Amplitudenunterschiede untersucht werden, wenn die Laufzeitinformation schon abgeklungen ist. In der Praxis hat sich z.B. eine Taktfrequenz von ca. 100KHz - 200 KHz als tauglich erwiesen, wobei in einem ersten Teil einer Taktperiode das Signal auf Laufzeitunterschiede, die ja dann als Amplitude im Signal auftreten, vor der Ausregelung der Phase untersucht wird und im zweiten Teil einer Taktperiode auf reine Amplitudenunterschiede. Mit der Information aus der zweiten Hälfte einer Taktperiode wird dann wenigstens eine der im Ausführungsbeispiel zwei Elektroden über die Amplitudenregelung 18 nur in der Amplitude beeinflusst, um etwa gleich große Signale aus beiden Strecken zu erhalten und damit den Differenzwert zu Null zu regeln. Gleich große Signale beider Strecken führen zu einem Nullsignal ohne taktsynchrone Wechselanteile.

Selbstverständlich muss nicht unbedingt die Phase der direkt wirkenden Elektrode 21 entsprechend der der Laufzeitbeeinflussung unterliegenden Elektrode 12 angepasst werden. Bei entsprechender Beschaltung kann auch die der Laufzeitbeeinflussung unterliegenden Elektrode beeinflusst werden.

Durch diese beiden geschlossenen Regelkreise
- Amplitudenregelung
- Laufzeitregelung
zu jeweils einem "0-taktsynchronen" Anteil werden die Eingangs genannten Vorteile erreicht.

Unter Bezug auf Fig. 1 wird bei der erfindungsgemäßen Anordnung Ladung dem Verstärker 23 über eine zweite Strecke 20 und die Leitung 40 von der Elektrode 21 zugeleitet Das Verfahren dient zur Messung der Laufzeit von Feldänderungen an elektrischen Feldern (Fig. 1) und/oder magnetischen Feldern (Fig. 8), also zur Messung von zeitlichen Änderungen an einem elektrischen und/oder magnetischen Feld bzw. Feldänderungen. Zunächst wird Ladung von einer Taktsteuerung 11 z.B. mit 200 KHz vom Ausgang 11 E moduliert über Leitung 30, 31 über die Elektrode 12 in eine Erfassungsstrecke in einem sensoraktiven Bereich 14 eingebracht. Die Ladung auf der Elektrode beeinflusst, dass umgebende elektrische Feld zwischen Elektrode und Objekt O. Dieser Einfluss erfolgt mit Lichtgeschwindigkeit. Mit dem selben Takt, jedoch durch den Invertierer 22 invertiert, wird Ladung auch an einer weiteren Elektrode 21 als Kompensationselektrode erzeugt, deren Ladung auch taktweise das Empfangssignal am Verstärker 23 beeinflusst. Dazu gelangt Ladung im Takt der Taktsteuerung 11 über Leitung 30, 33 an Eingang 17a des Phasenschiebers 17 und über Ausgang 17b des Phasenschiebers und Leitung 34 an den Eingang 22a des Invertierers 22, von dessen Ausgang 22b die Ladung über Leitung 35 an den Eingang 18a der Amplitudenregelung 18 gelang Von der Amplitudenregelung 18 gelangt die Ladung über den Ausgang 18b zur Elektrode 21.

Damit liegt am Eingang 23a des Verstärkers 23 im Wechsel des Takts der Taktsteuerung 11 das Signal S13 von den beiden Elektroden einmal über Leitung 32, 40 und einmal über Leitung 20, 40 als erste zeitliche Änderung bzw. zweite zeitliche Änderung in Folge der Feldänderung an. Das Signal S13 gelangt über Leitung 40 zu Verstärker 23 und wird im Verstärker verstärkt und dann über Leitung 41 zwei ähnlich aufgebauten Synchrondemodulatoren D1, D2 mit Vergleichern 15 bzw. 16 zugeleitet, die in Fig. 1 unten dargestellt sind. Aufgabe der Synchrondemodulatoren D1, D2 ist es dabei nicht, die Phase genau zu detektieren, sondern taktweise die Amplitude. Die Phasengenauigkeit hat keinen Einfluss auf die Messgenauigkeit, so dass z.B. eine Phasenverschiebung von 20° noch unbeachtlich ist.

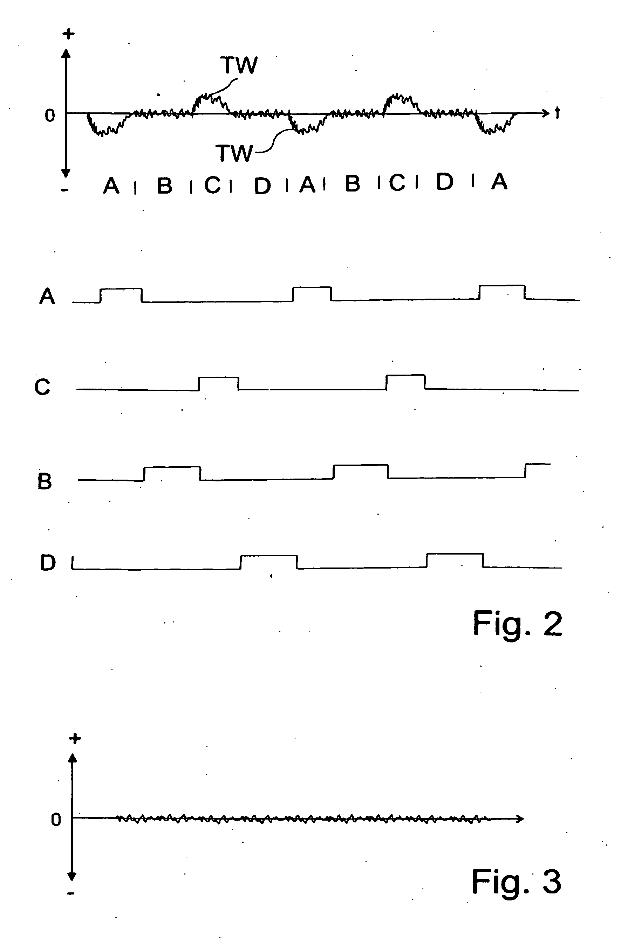

Bevor auf diese Schaltungen näher eingegangen wird, zeigt Figur 2 oben das Signal, wie es nach dem Verstärker 23 ansteht. Das dargestellte Signal zeigt einen Signalverlauf, wie er bei einer Laufzeit über z. B. 15 cm Objektabstand ohne eine Anpassung der Signalphase in mindestens einer der beiden Feldstrecken von den Elektroden 12 und 21 vorliegt. Das Auftreten der taktsynchronen Signalanteile kann mit einer entsprechenden Torschaltung erfasst und den entsprechenden Elektroden zugeordnet werden. Dabei ist zwischen Amplitudenunterschieden im gesamten Taktbereich und Signalamplituden unmittelbar nach dem Umschalten des Takes zu unterscheiden. Dazu wird ein Taktzyklus in vier Abschnitte A/B/C/D in Fig. 2 unterteilt. Die Abschnitte B, D repräsentieren Amplitudenwerte, die im ausgeregelten Zustand ohne taktsynchrone Amplitudenunterschiede, also d. h. von Takt zu Takt gleich sind. Der ausgeregelte Zustand der Abschnitte B, D bezieht sich auf die Amplitudenregelung mindestens einer der beiden Elektroden. Im ausgeregelten Zustand der Amplituden in den Taktabschnitten B und D auf gleiche Werte steht bei gleicher Laufzeit von beiden Elektroden ein Signal ohne taktsynchrone Signalanteile an. Nur bei einem Laufzeitunterschied zwischen dem Signal der weiteren Elektrode 21 und dem Signal aus der Erfassungsstrecke erscheint ein taktsynchroner Signalanteil, welcher jedoch in die Abschnitte A und C fällt.

In Fig. 1 werden die Synchrondemodulatoren D1 und D2 mit Vergleicher von der Taktsteuerung 11 über die Ausgänge 11 A, 11B, 11C und 11D und die zugehörigen Taktleitungen 50A, 50B, 50C und 50D so ausgesteuert, dass Synchrondemodulator D1 den taktsynchronen Amplitudenunterschied der zeitlichen Änderungen im empfangenen Signal S13 über den Amplitudenregler 18 zur Regelung der taktsynchronen Anteile am Verstärker 23 zu "0" ausregelt, während Synchrondemodulator D2 den Laufzeitunterschied zwischen den Signalen detektiert und über den Phasenschieber 17 den taktsynchronen Anteil an Verstärker 23 zu "0" ausregelt. Bei nicht ausgeregelter Laufzeit steht in den Taktabschnitten A und C ein taktsynchroner Signalanteil mit von Phase zu Phase wechselnder Polarität an, der am Ausgang des Synchrondemodulators D2 zu einem Regelsignal S16 führt, das wiederum den Phasenschieber 17 so ansteuert, dass am Ausgang 23b des Verstärkers 23 ein "0"-Signal ohne taktsynchrone Signalanteile anliegt.

Im Synchrondemodulator D1 wird das Empfangssignal S13 wieder in die beiden Teilsignale der Elektrode 12 und der weiteren Elektrode 21 zerlegt. Dazu gelangt das Signal über Leitung 41, 41 B, 41 D zu den Abschnitten B und D zugeordneten Schaltern, die über Taktleitung 50B und 50D von der Taktsteuerung 11 im Taktwechsel der Abschnitte B und D betätigt sind. Damit steht entsprechend der Schalterstellung am Ausgang der Schalter das den Abschnitten B und D entsprechende Signal der Änderungen, die von der vom Objekt ggf. beeinflussten Erfassung am Empfänger stammen, auf Leitung 60B und 60D an. Diese Signale werden über einen Integrator R3, R4 und/oder C3, C4 den Eingängen 15a, 15b des Vergleichers 15 zugeleitet, an dessen Ausgang 15c bei gleichgroßen Signalen ein entsprechendes Steuersignal für einen Nullzustand des Signals S13 ansteht. Steht dort ein anderes Signal an, ergibt sich ein beliebiges Steuersignal als Signal S15 über Leitung 70 an den Eingang 18c des Amplitudenreglers 18, der die Amplitude der weiteren Elektrode 21 so nachregelt, dass das Signal S13 zu einem dem Nullzustand entsprechenden Signal wird, d.h. keine taktsynchrone Anteile enthält und somit keine weitere Nachregelung erforderlich ist. In diesem Zustand sind die taktsynchronen Wechselanteile eliminiert und damit enthält der Regelwert 94 die Information über die Objekteigenschaften, während der Regelwert 93 die Information über die Entfernung des Objekts O enthält. In der Zeichnung wird die Amplitude des weiteren Ladungsträgers 21 nachgeregelt, es versteht sich jedoch von selbst dass diese Regelung, wie auch aus der EP 706 648 B1 bekannt ebenso auf die Elektrode 12 oder auf beide oder im Fall mehrerer aussendenden Elemente auf mehrere einwirken kann.

Mit anderen Worten wird der Synchrondemodulator D1 zur taktabschnittsweisen Amplitudendetektion eingesetzt, an dessen Eingang, d.h. an den den Abschnitten B und D zugeordneten Schaltern vorzugsweise bereits ein Signal ohne taktsynchrone Anteile aus beiden Strecken ansteht. Aus dem dann verbleibenden Nullsignal kann am Ausgang des Amplitudendetektors in Form des Synchrondemodulators D2 das Taktwechselsignal TW im Rauschen detektiert werden.

Eine Phasenänderung der Abtastzeiten über die Taktleitungen 50A, 50B, 50C, 50D hat in weiten Bereichen keinen Einfluss auf die Abstandsmessungen. Im Gegensatz zu der in der DE 100 22 054 A1 benötigten hohen Genauigkeit der Phase des Synchrondemodulators geht sie erfindungsgemäß nicht in die Entfernungsmessung ein. Lediglich ein Abtasten der Amplitude zu einem ungefähren Zeitpunkt des Taktes ist notwendig. Daher ist erfindungsgemäß die Synchrondemodulation nur quasi eine Synchrondemodulation. Die Phase ist an sich kaum von Bedeutung, um Unterschiede in der Amplitude der Taktwechselsignale erkennbar zu machen und den taktsynchronen Anteil am Eingang des Amplitudendetektors in Form des Synchrondemodulators D2 zu Null zu machen. Diese Taktwechselsignale werden dann mittels der Phasenverschiebung der in der Vorrichtung zwischen den Elektroden 12 und 21 anstehenden Signale zueinander minimiert und vorzugsweise zu Null gemacht. Die damit sich ergebende Verzögerung des Phasenschiebers 17 ist die Laufzeit der Feldänderung und damit die zu bestimmende Entfernung des Objekts O.

In Figur 1 Mitte werden die beiden oberen Schalter des Synchrondemodulators D2 durch die Torschaltung entsprechend den Bereichen A und C gemäß Fig. 2 oben angesteuert. Im Synchrondemodulator D2 wird das Empfangssignal S13 ebenfalls den Amplitudensignalen der beiden Elektroden 12 sowie 21 zugeordnet, allerdings die den Abschnitten A und C entsprechenden Signalabschnitte. Dazu gelangt das Signal über Leitung 41, 41 A, 41C zu den Abschnitten A und C zugeordneten Schaltern, die über Taktleitung 50A und 50C von der Taktsteuerung 11 im Taktwechsel der Abschnitte A und C betätigt sind. Damit steht entsprechend der Schalterstellung am Ausgang der Schalter das den Abschnitten A und C entsprechende Signal auf Leitung 60A und 60C an. Diese Signale werden über Integratoren R3, R4 und/oder C3, C4 den Eingängen 16a, 16b des Vergleichers 16 zugeleitet.

Damit wird taktweise die beim Taktwechsel auftretende, der Laufzeit in der Erfassungsstrecke im sensoraktiven Bereich 14 entsprechende erste Feldänderung und zweite Feldänderung erfasst. Die Größen der Signale sind in ihrer Amplitude zwar vom Objekt O abhängig, da es jedoch um die Bestimmung des taktsynchronen Differenzwertes zwischen diesen beiden Signalen geht, spielt dies keine Rolle. Die beiden Signale werden in dem weiteren Vergleicher 16 verglichen. Der Differenzwert am Ausgang 16c des Vergleichers entspricht dem Phasenunterschied zwischen erster und zweiter Feldänderung und ist auf Grund der Integration im Empfänger zu einem Amplitudenwert umgewandelt. Dieser Wert kann zu einem beliebigen Zeitpunkt abgetastet werden, zu dem keine Phaseninformation mehr vorhanden ist. Dieser Differenzwert der nicht phasengenauen, d.h. nicht genau in den Phasengrenzen übereinstimmenden Amplitudenwerte gelangt über Leitung 80 als Signal S18 an den Eingang 17c des Phasenschiebers 17 und wird im Phasenschieber 17 so verändert, bis er minimal und vorzugsweise zu Null wird, um dadurch die Laufzeit von Feldänderungen in den elektrischen und/oder magnetischen Feldern zu bestimmen, Aus der dabei eingestellten Verzögerung des Phasenschiebers 17 kann die Laufzeit bestimmt werden und damit die Entfernung, die am Ausgang 17d des Phasenschiebers 17 als Signal für die Laufzeit 93 ansteht. Durch die Veränderung des Phasenschiebers 17 verschwinden die Amplituden des Taktwechselsignals TW gemäß Figur 3 im Rauschen.

Der Phasenschieber 17 kann eine analog arbeitende Schaltung sein, aber auch eine digitale Signalverzögerung. Dabei kann z.B. ein hochfrequenter Takt so ausgezählt werden, dass z.B. der Takt in 1ns-Schritte versetzt werden kann. Dazu wird das Signal S16 mit einem A/D Wandler abgetastet und das Ergebnis in eine entsprechende Phasenverschiebung umgewandelt.

Wird der sensoraktive Bereich 14 mit den Messflächen hochohmig über die Impedanzen Z1 und Z2 an die Leitungen 31 und 32 bzw. über die Impedanzen Z3 und Z4 an die Leitungen 36 und 20 und damit an die Treiber und den Verstärker 23 so angekoppelt, dass selbst kleinste Änderungen der Umgebung sich an der Messfläche in einer Amplituden- und/oder Phasenänderung bemerkbar machen. Gleichzeitig wird eine Verstärkerschaltung so hochohmig an die Messfläche angekoppelt, dass dadurch die Amplitude und/oder Phase des Messsignals kaum oder wenig beeinflusst werden. Im Ausführungsbeispiel erfolgt die Ankopplung vorzugsweise über Kondensatoren und Widerstände, es können jedoch auch Spulen oder Kombinationen aus vorgenannten Komponenten oder einzelne der Komponenten für diesen Zweck vorgesehen sein. Im Ausführungsbeispiel wurde als Impedanz Z eine Reihenschaltung aus 10 pF und 56 kΩ bei einer Taktfrequenz von 100 kHz und einer Treiberspannung von 2 Volt verwendet. Vorzugsweise ist die hochohmige Ankopplung gegenüber den Treibern und dem Verstärker 23 annähernd gleich groß ausgebildet, was im Aüsführungsbeispiel durch gleichgroße Kondensatoren, Widerstände, Spulen oder Kombinationen der genannten Komponenten geschieht.

Durch die kleine Kapazität bzw. den hohen Widerstand oder die hohe Induktion - im Ausführungsbeispiel - der Kondensatoren ergibt sich die gewünschte hohe Impedanz von der Messfläche, der Elektrode 12, zur Endstufe und von der Messfläche zum Verstärker 23. Damit lassen sich auch kleinste Änderungen erfassen, wenn das Objekt O über Luftkapazität bzw. andersartige elektrische Verbindung mit dem Bezugspotenzial der erfindungsgemäßen Schaltung In Verbindung steht. In Fig. 1 ist dies durch die gestrichelt eingetragene Masse 19 verdeutlicht. Auch eine metallisch leitende Verbindung mit dem Bezugspotenzial der Schaltung in unmittelbarer Nähe der Messfläche stört die Empfindlichkeit des Systems nicht. Auf Grund der Vorverstärkung bzw. der hohen Regelleistung der Synchrondemodulatoren D1, D2 mit Vergleichern können auch kleinste Änderungen im Feld einwandfrei detektiert werden.

Fig. 8 zeigt eine alternative Ausführungsform der Erfindung, die eine Laufzeitmessung zur Erfassung von Feldänderungen in Folge sich ändernder Induktivitäten ermöglicht. Die Ausführungsform der Fig. 8 unterscheidet sich von der Ausführungsform der Fig. 1 im Wesentlichen durch die Verwendung von Spulen anstelle von Elektrode. Insofern ist auch die Schaltung und ihre Verwendung in den unteren zwei Dritteln der Fig. 8 identisch mit der bisher erfolgten Beschreibung der Fig. 1, wenn man dort den Begriff Elektrode durch Spule ersetzt. Verändert ist der sensoraktive Bereich, d.h. die Schaltung nach dem Amplitudenregler 18 und nach der Leitung 31 (in der Fig. 8 von diesen Bezugszeichen aus nach oben) sowie der Erfassungsbereich vor dem Verstärker 23. Insofern wurden auch weitestgehend dieselben Bezugszeichen verwendet.

Die Taktsteuerung 11 gibt über Ausgang 11 E und über die Leitungen 31 und 32 mit zwischengeschalteter Impedanz Z2 einen Strom an die als Kompensationsspule verwendete weitere Spule 121. Entsprechend im Takt der Taktsteuerung 11 invertiert gelangt ein Strom über den Phasenschieber 17 und den Amplitudenregler 18 von dessen Ausgang 18b über die Leitungen 37 und 36 mit zwischengeschalteter Impedanz Z1 an die Spule 112. Die Spulen 112, 121 sind über Leitung 38 an Masse 39 gelegt. Das so getaktete Stromsignal wird von der Empfangsspule 113 empfangen, ermittelt und an die Eingänge 23a, 23a' des Verstärker 23 gegeben. Ab dem Ausgang 23b erfolgt dann die oben beschriebene Amplituden-und Phasenregelung. Haben beide Spulen 112 und 121 dieselbe Induktion - ggf. nach Ausregelung über den Amplitudenregler 18 - liegt am Ausgang 23b des Verstärkers 23 ein einem Nullzustand entsprechendes Signal an. Dieser ausgeregelte Zustand wird auch erhalten, wenn die Spulen 112 und 121 ihrerseits in einem externen Magnetfeld im sensoraktiven Bereich 14 bewegt werden. Befindet sich jetzt aber ein metallisches Objekt O z.B. Im Boden vergraben im sensoraktiven Bereich, verändert dieses Objekt die Induktion der Spule 112, während die Spule 121 als Referenzspule - im Ausführungsbeispiel nicht beeinflusst wird. Diese Änderung wird taktweise von der Empfängerspule 113 erfasst und ausgewertet. Auch hier zeigt sich der Effekt, dass diese Änderung des Feldes sich mit Lichtlaufzeit fortpflanzt, so dass wie zuvor beschrieben aus einer Phasenregelung der Taktwechselsignale die Entfernung des Objekts O als Signal 93 bestimmt werden kann. Gleichzeitig liefert das Signal 94 eine Information über die Wirbeistromeigenschaften bzw. Masse des Objekts O. Selbstverständlich kann die zweite Feldänderung auch auf elektronischen Wege als Spannungssignal ohne Verwendung eines Kompensationselements insbesondere bei einer induktiven Lösung vorliegen.

Vorteilhaft bei der Erfindung ist auch die beliebige Wahl der Taktfrequenz, die von einem Taktzyklus zum nächsten beliebige Werte annehmen kann. Zur Unterdrückung von möglichen Interferenzen bei parallel eingesetzten und nicht synchronisierbaren Systemen kann also problemlos ein beliebiges "Frequenzhopping" (FDMA) eingesetzt werden. Somit ist dieses System geeignet, mit einfachen Mitteln nicht nur eine einzelne Laufzeitmessstrecke zu realisieren, sondern auch mehrere parallele Erfassungsstrecken.

Die Elemente der zugehörigen Vorrichtung ergeben sich bereits aus der bisherigen Erläuterung, insbesondere unter Bezug auf die Figuren 1 und 8.

### Bezugszeichenliste

- 11: Taktsteuerung
- 11A,11E,:
- 11B,11C,11D: Ausgang
- 12: Elektrode
- 14: sensoraktiver Bereich
- 15: Vergleicher
- 15a, 15b: Eingang
- 15c: Ausgang
- S15: Signal nach Vergleicher 15
- 16: weiterer Vergleicher
- 16a, 16b: Eingang
- 16c: Ausgang
- S16: Differenzwert nach Vergleicher 16
- 17: Phasenschieber
- 17a, 17c: Eingang
- 17b, 17d: Ausgang
- 18: Amplitudenregelung
- 18a, 18c: Eingang
- 18b: Ausgang
- 19: Potenzial von O
- 20: Leitung
- 21: weitere Elektrode
- 21a: Eingang
- 22: Invertierer
- 22a: Eingang
- 22b: Ausgang
- 23: Verstärker
- 23a: Eingang
- 23b: Ausgang
- D1, D2: Synchrondemodulator
- O: Objekt
- R1 - R4, C1 - C4: Integrator
- TW: Taktwechselsignal
- Z1, Z2, Z3, Z4: Impedanz
- 30 - 38: Leitung
- 39: Masse
- 40, 41: Leitung
- 41A,41B,41C,41: D Leitung
- 50A,50B,50C,50D: Taktleitung
- 60A,60B,60C,60D: Taktleitung
- 70, 80: Leitung
- 93: Signal Laufzeit
- 94: Signal Reflexion/Masse
- 112: Spule
- 113: weitere Spule
- 121: weitere Spule

## Patentansprüche

1. Verfahren zur Messung der Beeinflussung oder der Laufzeit von elektrischen und/oder magnetischen Feldern bzw. Feldänderungen mit den Schritten:
- Übermitteln einer Mehrzahl von von einer Taktsteuerung (11) getakteten, ersten zeitlichen Änderungen des elektrischen und/oder magnetischen Felds mittels wenigstens einem die erste Feldänderung erzeugenden Element an wenigstens einen Empfänger in einem sensoraktiven Bereich (14), wobei ein Objekt (O) die ersten Feldänderungen in Folge der Annäherung, Anwesenheit und/oder Entfernung des Objekts (O) beeinflusst, wobei jede dieser ersten Feldänderungen aus zeitlich aufeinanderfolgenden Einschaltzeitabschnitten A und B besteht,
- Übermitteln einer Mehrzahl von von der Taktsteuerung (11) mit demselben Takt getakteten, zweiten zeitlichen Änderungen des elektrischen und/oder magnetischen Felds mittels wenigstens einem die zweite Feldänderung erzeugenden Element an den Empfänger, wobei die zweiten Feldänderungen in Pulspausen der ersten Feldänderungen liegen und jede dieser zweiten Feldänderungen jeweils aus zeitlich aufeinanderfolgenden Einschaltzeitabschnitten C und D besteht und die zweiten Feldänderungen mittels eines Phasenschiebers zeitlich zu den ersten Feldänderungen verschiebbar sind,
- Empfangen der ersten und zweiten Feldänderungen mittels dem wenigstens einem Empfänger,
- Ermitteln des aus den ersten und zweiten Feldänderungen resultierenden Empfangssignals am Empfänger,
- Aufteilen des Empfangssignals (S13) in die den Einschaltzeitabschnitten A, B, C und D entsprechenden Bereiche mittels einer Torschaltung im Takt der Taktsteuerung (11),
- taktweises Vergleichen von jeweils einem Einschaltzeitabschnitt B der ersten Feldänderungen mit jeweils einem einem Einschaltzeitabschnitt D der zweiten Feldänderungen entsprechenden Empfangssignal zur Erzeugung eines Vergleichswerts am Ausgang eines Vergleichers (15), der zur Regelung der Amplitudenwerte der ersten und/oder zweiten Feldänderungen so verwendet wird, dass die den Einschaltzeitabschnitten B und D entsprechenden Abschnitte des Empfangssignals zumindest am Eingang des Vergleichers in ihrer Amplitude im Wesentlichen gleich groß sind,
- taktweises Erfassen eines ersten, während eines Einschaltzeitabschnitts A am Empfänger empfangenen Taktwechselsignals (TW) und eines zweiten, während eines Einschaltzeitabschnitt C am Empfänger empfangenen Taktwechselsignals (TW) bei im Wesentlichen auf gleiche Amplitude an den Eingängen (15a, 15b) des Vergleichers (15) ausgeregelter Größe der den Einschaltzeitabschnitten B und D entsprechenden Abschnitte des Empfangssignals,
- Bestimmen eines Differenzwerts (S16) durch Vergleich des ersten Taktwechselsignals (TW) mit dem zweiten Taktwechselsignal ihrer Amplitude nach in einem weiteren Vergleicher (16),
- Verändern des Differenzwerts (S16) mittels eines Phasenschiebers (17) zur Veränderung der Phasenverzögerung zwischen ersten und zweiten Feldänderungen" bis der Differenzwert (S16) minimal, vorzugsweise Null wird,
- Verwenden der bei minimalem Differenzwert eingetretenen Verzögerung des Phasenschiebers zur Bestimmung der Beeinflussung oder der Laufzeit der Veränderung des elektrischen und/oder magnetischen Feldes.

2. Verfahren nach Anspruch 1, **dadurch gekennzeichnet, dass**, wenn die Änderungswerte in Folge der ersten und der weiteren Feldänderung an den Eingängen (15a, 15b) des Vergleichers (15) im Wesentlichen gleich groß sind, am Ausgang des Verstärkers (23) nur ein Rauschen ohne taktsynchrone Wechselanteile in Folge der Feldänderungen anliegt.

3. Verfahren nach Anspruch 1 oder 2, **dadurch gekennzeichnet, dass** das taktweisen Erfassen der Amplitude des beim Taktwechsel auftretenden Taktwechselsignals (TW) zwischen erster Feldänderung und weiterer Feldänderung bzw. weiterer Feldänderung und erster Feldänderung Taktwechselsignals (TW) trotz des Rauschens bei auf im Wesentlichen gleiche Größe am Eingang des Vergleichers (15) ausgeregelter Größe der Änderungswerte erfolgt.

4. Verfahren nach einem der vorhergehenden Ansprüche, **dadurch gekennzeichnet, dass** zur Messung der Laufzeit in Folge der ersten und der weiteren Feldänderung am Empfänger die Amplitude nach dem Umschalten der aussendenden Elemente (12,21) gemessen wird und mittels des Phasenschiebers (17) auf Null ausgeregelt wird.

5. Verfahren nach Anspruch 4, **dadurch gekennzeichnet, dass** die dabei auftretende Phasenverschiebung, die die Amplitude der Taktwechselsignale (TW) zueinander auf Null ausregelt, der Entfernung des Objekts (O) entspricht.

6. Vorrichtung zur Messung der Beeinflussung oder der Laufzeit von elektrischen und/oder magnetischen Feldern bzw. Feldänderungen mit:
- einer Taktsteuerung (11).
- wenigstens einem aussendenden Element zur Übermittelung einer Mehrzahl von von der Taktsteuerung (11) getakteten, ersten zeitlichen Änderungen des elektrischen und/oder magnetische Felds an wenigstens einen Empfänger in einem sensoraktiven Bereich (14), wobei ein Objekt (O) die ersten Feldänderungen in Folge der Annäherung, Anwesenheit und/oder Entfernung des Objekts (O) beeinflusst, wobei jede dieser ersten Feldänderungen aus zeitlich aufeinanderfolgenden Einschaltzeitabschnitten A und B besteht,
- Mitteln zum Übermitteln einer Mehrzahl von von der Taktsteuerung (11) mit demselben Takt getakteten, zweiten zeitlichen Anderungen des elektrischen und/oder magnetischen Felds mittels wenigstens einem die zweite Feldänderung erzeugenden Element an den Empfänger, wobei die zweiten Feldänderungen in Pulspausen der ersten Feldänderungen liegen und jede dieser zweiten Feldänderungen jeweils aus zeitlich aufeinanderfolgenden Einschaltzeitabschnitten C und D besteht und die zweiten Feldänderungen mittels eines Phasenschiebers zeitlich zu den ersten Feldänderungen verschlebbar sind,
- dem Empfänger zum Empfangen der ersten und zweiten Feldänderungen,
- Mitteln (D1) zum Ermitteln des aus den ersten und zweiten Feldänderungen resultierenden Empfangssignals am Empfänger,
- Mitteln zum Aufteilen des Empfangssignals (S13) in die den Einschaltzeitabschnitten A, B, C und D entsprechenden Bereiche, mittels einer Torschaltung im Takt der Taktsteuerung (11),
- einem Vergleicher (15) zum taktweisen Vergleichen von jeweils einem Einschaltzeitabschnitt B der ersten Feldänderungen mit jeweils einem einem Einschaltzeitabschnitt D der zweiten Feldänderungen entsprechenden Empfangssignal zur Erzeugung eines Vergleichswerts (S15) an einem Ausgang (15c) des Vergleichers (15),
- wenigstens einem Regler (18), der zur Regelung der Amplitudenwerte der ersten und/oder zweiten Feldänderungen so verwendet wird, dass die den Einschaltzeitabschnitten B und D entsprechenden Abschnitte des Empfangssignals zumindest am Eingang des Vergleichers in ihrer Amplitude im Wesentlichen gleich groß sind,
- Mitteln (D2) zum taktweises Erfassen eines ersten, während eines Einschaltzeitabschnitts A am Empfänger empfangenen Taktwechselsignals (TW) und eines zweiten, während eines Einschaltzeitabsnitt C am Empfänger empfangenen Taktwechselsignals (TW) bei auf im Wesentlichen gleiche Amplitude an den Eingängen (15a, 15b) des Vergleichers (15) ausgeregelter Größe der den Einschaltzeitabschnitten B und D entsprechenden Abschnitte des Empfangssignals,
- einem weiteren Vergleicher (16) zum Bestimmen eines Differenzwerts (S16) durch Vergleich des ersten Taktwechselsignals (TW) mit dem zweiten Taktwechselsignal ihrer Amplitude nach,
- einem Phasenschieber (17) zum Verändem des Differenzwert (S16) mittels einer Veränderung der Phasenverzögerung zwischen ersten und zweiten Feldänderungen, bis der Differenzwert (S16) minimal, vorzugsweise Null wird,
- Mitteln zum Bestimmen der Beeinflussung oder der Laufzeit der veränderungen des elektrischen und/oder magnetischen Felds durch Verwenden der bei minimalem Differenzwert eingetretenen Verzögerung des Phasenschiebers,

7. Vorrichtung nach Anspruch 5, **dadurch gekennzeichnet, dass** im sensoraktiven Bereich (14) wenigstens eine Erfassungsstrecke zur Erfassung der Veränderung des elektrischen bzw. magnetischen Feldes vorgesehen ist, die zwischen dem aussendenden Element und dem Empfänger gebildet ist.

8. Vorrichtung nach Anspruch 6 oder 7, **dadurch gekennzeichnet, dass** das aussendende Element eine Elektrode (12) oder eine Spule (112, 121) ist.

9. Vorrichtung nach einem der Ansprüche 6 bis 8, **dadurch gekennzeichnet, dass** der Empfänger die aussendende Elektrode (12) mit nachgeschaltefem Empfangsverstärker (23) oder eine Empfängerspule (113) ist.

## Claims

1. A method for the measurement of the influence of or of the propagation time of electrical and/or magnetic fields respectively field changes comprising the steps:
- transmitting a plurality of first temporal field changes of the electrical and/or magnetic field, which first temporal field changes are clocked by a clock pulse control (11), by means of at least one transmitting element producing the first field change to at least one receiver (13) within a sensor-active region (14), wherein an object (O) influences the first field changes in consequence of the approach, presence and/or distancing of the object (O), wherein each of these first field changes is comprised of timely consecutive switch-on time sections A and B,
- transmitting a plurality of second temporal field changes of the electrical and/or magnetic field, which second temporal field changes are clocked by the clock pulse control (11) with the same clock rate, by means of at least one transmitting element producing the second field change to the receiver, wherein the second field changes lie in pulse pauses of the first field changes and wherein each of these second field changes is comprised of timely consecutive switch-on time sections C and D and wherein the second temporal field changes are displaceable in time relative to the first field changes via a phase shifter,
- receiving the first and the second field changes by means of the at least one receiver,
- determining a received signal resulting from the first and the second field changes at the receiver,
- dividing the received signal (S13) into sections corresponding to the switch-on time sections A, B, C, and D by means of a gate circuit at the clock rate of the clock pulse control (11),
- comparing the received signals of the first field changes each, corresponding to a switch-on time section B, with the second field changes each, corresponding to a switch-on time section D, in a clocked manner for generating a comparison value at an output of a comparator (15) which is used for the regulation of the amplitude values of the first field changes and/or the second field changes in such a way that sections of the received signals corresponding to the switch-on sections B or D are substantially of the same amplitude at least at the inputs of the comparator,
- detecting in a clocked manner a first clock pulse alternation signal (TW) received at the receiver during a switch-on time section A and a second clock pulse alternation signal (TW) received at the receiver during a switch-on time section C when the magnitude of the sections of the received signal, corresponding to the switch-on time sections B and D have been regulated such as to be of substantially equal ampliitude at the inputs (15a, 15b) of the comparator (15),
- determining a difference value (S16) by comparison of the first clock pulse alternation signal (TW) with the second clock pulse alternation signal in regard to the amplitudes thereof in a further comparator (16),
- changing the difference value (S16) by means of a phase shifter (17) for the purposes of changing the phase delay between the first and the second field changes until the difference value (S16) becomes minimal, preferably zero,
- using the delay of the phase shifter occurring at the minimum difference value for the determination of the influence of or of the propagation time of field change of the electrical and/or magnetic field.

2. Method according to claim 1, **characterized in that**, if the change values in consequence of the first and the second field changes are of substantially equal amplitude at the inputs (15a, 15b) of the comparator (15), only a noise without clock synchronous alternating components in consequence of the field changes is present at the output of the amplifier (23).

3. Method according to claim 1 or 2, **characterized in that** a detecting in a clocked manner of the amplitude of the clock pulse alternation signal (TW) occurring at the clock pulse alternation between the first field change and the second field change respectively between the second field change and the temporal field change of the clock pulse alternation signal (TW) is effected despite the noise in the event of magnitudes of the change values that have been regulated to be of substantially the same amplitude at the inputs of the comparator (15).

4. Method according to one of the preceding claims, **characterized in that** the amplitude is measured at the receiver after the transmitting elements (12,21) are switched over and is regulated to zero by means of the phase shifter (17) so as to measure the propagation time as a consequence of the first and the second field changes.

5. Method according to Claim 4, **characterized in that** the therein occurring phase shift regulating the amplitude of the clock pulse alternating signals (TW) to each other to zero, corresponds to the distance of the object (O).

6. A device for the measurement of the influence of or of the propagation time of electrical and/or magnetic fields respectively field changes comprising::
- a clock pulse control (11),
- at least one transmitting element (12) for transmitting a plurality of first temporal field changes of the electrical and/or magnetic field which first field changes are clocked by the clock pulse control (11) to at least one receiver (13) within a sensor-active region (14), wherein an object (O) influences the first field changes in consequence of the approach, presence and/or distancing of the object (O), wherein each of these first field changes is comprised of timely consecutive switch-on time sections A and B,
- means for transmitting a plurality of second temporal field changes of the electrical and/or magnetic field, which second field changes are clocked by the clock pulse control (11) with the same clock rate, by means of at least one transmitting element producing the second field change to the at least one receiver, wherein the second field changes lie in pulse pauses of the first field changes and wherein each of these second field changes is comprised of timely consecutive switch-on time sections C and D and wherein the second field changes are displaceable in time relative to the first temporal field changes via a phase shifter,
- the receiver for receiving the first and the second field changes,
- means (D1) for determining the received signal resulting from the first and the second field changes at the receiver,
- means for dividing the received signal (S13) into sections corresponding to the switch-on time sections A, B, C, D by means of a gate circuit at the clock rate of the clock pulse control (11),
- a comparator (15) for comparing the received signals of the first field changes each, corresponding to a switch-on time section B, with the second field changes each, corresponding to a switch-on time section D, in a clocked manner for generating a comparison value (S15) at the output (15c) of the comparator (15),
- at least one regulator (18) which is used for the regulation of the amplitude values of the first and/or the second field changes in such a way that sections of the received signals corresponding to the switch-on sections B and D are substantially of the same amplitude at least at the inputs of the comparator,
- means (D2) for detecting in a clocked manner a first clock pulse alternation signal (TW) received at the receiver during a switch-on time section A and a second clock pulse alternation signal (TW) received at the receiver during a switch-on time section C when the magnitude of the sections of the received signal, corresponding to the switch-on time sections B and D have been regulated such as to be of substantially equal magnitude at the inputs (15a, 15b) of the comparator (15),
- a further comparator (16) for determining a difference value (S16) by comparison of the first clock pulse alternation signal (TW) with the second clock pulse alternation signal in regard to the amplitudes thereof,
- a phase shifter (17) for changing the difference value (S16) by means of changing the phase delay between the first and the second field changes until the difference value (S16) becomes minimal, preferably zero,
- means for determining the influence of or the propagation time of the field changes of the electrical and/or magnetic field in using the delay of the phase shifter occurring at the minimum difference value.

7. A device according to claim 6, **characterized in that** at least one detection path for detecting the field change of the electrical or magnetic field is provided within the sensor-active region (14), which detection path is formed between the transmitting element and the receiver.

8. A device according to claim 6 or 7, **characterized in that** the transmitting element is an electrode (12) or a coil (112, 121)..

9. A device according to any of the claims 6 to 8, **characterized in that** the receiver is the transmitting electrode (12) with a downstream arranged receiving amplifier (23) or a receiving coil (113).

## Revendications

1. Procédé de mesure de l'influence ou de la durée de champs ou de variations de champ électriques et/ou magnétiques, comportant les étapes consistant à :
- transmettre une pluralité de premières variations temporelles du champ électrique et/ou magnétique cadencées par un circuit de cadençage (11), au moyen d'au moins un élément produisant la première variation de champ, à au moins un récepteur dans une zone active en détection (14), un objet (0) influençant les premières variations de champ suite au rapprochement, à la présence et/ou à l'éloignement de cet objet (O), chacune de ces premières variations de champ consistant en des séquences d'activation A et B se suivant dans le temps,
- transmettre une pluralité de deuxièmes variations temporelles du champ électrique et/ou magnétique cadencées par le circuit de cadençage avec la même cadence, au moyen d'au moins un élément produisant la deuxième variation de champ, au récepteur, les deuxièmes variations de champ se situant durant des pauses de pulsation des premières variation de champ et chacune de ces deuxièmes variations de champ consistant respectivement en des séquences d'activation C et D se suivant dans le temps et les deuxièmes variations de champ pouvant être décalées dans le temps par rapport aux premières variations de champ au moyen d'un déphaseur,
- recevoir les premières et deuxièmes variations de champ au moyen dudit récepteur,
- déterminer le signal de réception résultant des premières et deuxièmes variations de champ au niveau du récepteur,
- distribution du signal de réception (S13) dans les zones correspondant aux séquences d'activation A, B, C et D au moyen d'une porte analogique dans la cadence du circuit de cadençage (11),
- comparaison cadencée de chaque séquence d'activation B des premières variations de champ avec chaque signal de réception correspondant à une séquence d'activation D des deuxièmes variations de champ, pour produire une valeur de comparaison à la sortie d'un comparateur (15) qui est utilisé pour le réglage des valeurs d'amplitude des premières et/ou deuxièmes variations de champ de telle sorte que les zones du signal de réception correspondant aux séquences d'activation B et D soient sensiblement de même amplitude au moins à l'entrée du comparateur,
- capture cadencée d'un premier signal de changement de cadence (TW) reçu pendant une séquence d'activation A au niveau du récepteur et d'un deuxième signal de changement de cadence (TW) reçu pendant une séquence d'activation C au niveau du récepteur, avec une grandeur des séquences du signal de réception correspondant aux séquences d'activation B et D réglée sensiblement à la même amplitude aux entrées (15a, 15b) du comparateur (15),
- détermination d'une valeur de différence (S16) par comparaison du premier signal de changement de cadence (TW) avec le deuxième signal de changement de cadence en fonction de leur amplitude dans un autre comparateur (16),
- modification de la valeur de différence (S16) au moyen d'un déphaseur (17) pour modifier le retard de phase entre les premières et deuxièmes variations de champ, jusqu'à ce que la valeur de différence (S16) soit minimale, de préférence nulle,
- utilisation du retard de phase du déphaseur se produisant avec la valeur de différence minimale pour la détermination de l'influence ou de la durée de la variation du champ électrique et/ou magnétique.

2. Procédé selon la revendication 1, **caractérisé en ce que**, lorsque les valeurs de modification sont sensiblement égales suite à la première et à l'autre variation de champ aux entrées (15a, 15b) du comparateur (15), il n'y a, à la sortie de l'amplificateur (23), qu'un souffle sans composante de variation synchrone avec la cadence, suite à ces variations de champ.

3. Procédé selon la revendication 1 ou 2, **caractérisé en ce que** la capture en cadence de l'amplitude du signal de changement (TW) intervenant lors du changement de cadence, se produit entre la première variation de champ et l'autre variation de champ ou entre l'autre variation de champ et la première variation de champ du signal de changement de cadence (TW) malgré le souffle, avec une grandeur des valeurs de modification réglée à sensiblement la même grandeur à l'entrée du comparateur (15).

4. Procédé selon l'une des revendications précédentes, **caractérisé en ce que** pour la mesure de la durée, suite à la première et à l'autre variation de champ au niveau du récepteur, l'amplitude est mesurée après la commutation des éléments émetteurs (12,21) et réglée à zéro au moyen du déphaseur (17).

5. Procédé selon la revendication 4, **caractérisé en ce que** le déphasage de phase qui se produit et qui règle l'amplitude des signaux de changement de cadence (TW) l'un par rapport à l'autre à zéro, correspond à l'éloignement de l'objet (0).

6. Dispositif pour la mesure de l'influence ou de la durée de champs ou de variations de champs électriques et/ou magnétiques comportant :
- un circuit de cadençage (11),
- au moins un élément émetteur pour la transmission d'une pluralité de premières variations temporelles cadencées par le circuit de cadençage (11) du champ électrique et/ou magnétique à au moins un récepteur dans une zone active en détection (14), un objet (0) influençant les premières variations de champ à la suite du rapprochement, de la présence et/ou de l'éloignement de l'objet (0), chacune de ces premières variations de champ consistant en des séquences d'activation A et B se suivant dans le temps,
- des moyens pour transmettre une pluralité de deuxièmes variations temporelles cadencées par le circuit de cadençage (11) du champ électrique et/ou magnétique cadencées à la même cadence par le circuit de cadençage (11), au moyen d'au moins un élément produisant la deuxième variation de champ, au récepteur, les deuxièmes variations de champ se situant durant des pauses de pulsation des premières variations de champ et chacune de ces deuxièmes variations de champ consistant respectivement en des séquences d'activation C et D se suivant dans le temps et les deuxièmes variations de champ pouvant être décalées temporellement par rapport aux premières modifications au moyen d'un déphaseur,
- le récepteur pour la réception des premières et deuxièmes variations de champ,
- des moyens (D1) pour déterminer le signal de réception résultant des premières et deuxièmes variations de champ au niveau du récepteur,
- des moyens pour distribuer le signal de réception (S13) dans les zones correspondant aux séquences d'activation A, B, C et D au moyen d'une porte analogique à la cadence du circuit de cadençage (11),
- un comparateur (15) pour comparer en cadence respectivement une séquence d'activation B des premières variations de champ avec un signal de réception correspondant à une séquence d'activation D des deuxièmes variations de champ pour produire une valeur de comparaison (S15) à une sortie (15c) du comparateur (15),
- au moins un moyen de réglage (18) qui est utilisé pour régler les valeurs d'amplitude des premières et/ou deuxièmes variations de champ de telle manière que les zones du signal de réception correspondant aux séquences d'activation B et D soit sensiblement égales en amplitude au moins à l'entrée du comparateur,
- des moyens (D2) pour déterminer en cadence un premier signal de changement de cadence (TW) reçu au niveau du récepteur pendant une séquence d'activation A ainsi qu'un deuxième signal de changement de cadence (TW) reçu au niveau du récepteur pendant une séquence d'activation C avec une grandeur des séquences du signal de réception correspondant aux séquences d'activation B et D réglée sensiblement à la même amplitude aux entrées (15a, 15b) du comparateur (15),
- un autre comparateur (16) pour déterminer une valeur de différence (S16) par comparaison du premier signal de changement de cadence (TW) avec le deuxième signal de changement de cadence en fonction de son amplitude,
- un déphaseur (17) pour modifier la valeur de différence (S16) en modifiant de décalage de phase entre les premières et deuxièmes variations de champ, jusqu'à ce que la valeur de différence (S16) soit minimale, de préférence nulle,
- des moyens pour déterminer l'influence ou la durée de la variation du champ électrique et/ou magnétique en utilisant le retard se produisant avec la valeur de différence minimale du déphaseur.

7. Dispositif selon la revendication 6, **caractérisé en ce qu'**il est prévu dans la zone active en détection (14) au moins un segment de capture pour capturer la variation du champ électrique ou magnétique, segment de capture qui est formé entre l'élément émetteur et le récepteur.

8. Dispositif selon la revendication 6 ou 7, **caractérisé en ce que** l'élément émetteur est une électrode (12) ou une bobine (112,121).

9. Dispositif selon l'une des revendications 6 à 8, **caractérisé en ce que** le récepteur est l'électrode émettrice (12) reliée à un amplificateur de réception (23), ou une bobine de réception (113).
